# EUROPÄISCHE PATENTANMELDUNG

(11) **EP 1 336 522 A2**
(43) Veröffentlichungstag der Anmeldung: **20.08.2003**
(21) Anmeldenummer: 03001830.3
(22) Anmeldetag: 29.01.2003
(51) Int. Cl.: B60J 7/047

(54) **Deckel für eine Dachöffnung eines Kraftwagens**

(30) Priorität: 14.02.2002 DE 10205960
(71) Anmelder: DaimlerChrysler AG, 70567 Stuttgart (DE)
(72) Erfinder: Fitterer, Holger, 76287 Rheinstetten (DE)

(57) **Zusammenfassung**

Die Erfindung betrifft einen Deckel zum Schließen einer Dachöffnung (12) eines Kraftwagens mit einem Hohlquerschnitt, dessen obere Begrenzungswand (22) mit ihrer Oberseite einen Teil der Außenkontur des Kraftwagendachs (15) bildet, und mit einer unteren Begrenzungswand (24), die umlaufend mit der oberen Begrenzungswand (22) verbunden ist, wobei innerhalb des Hohlquerschnitts eine an oberer und unterer Begrenzungswand (22,24) abgestützte Distanzmittelanordnung (32) vorgesehen ist.

Obere Begrenzungswand (22) und untere Begrenzungswand (24) sind getrennt voneinander ausgebildete Kunststoffteile (26,28), wobei sich der Hohlquerschnitt des Deckels (14) vom Mittelbereich ausgehend zu dessen Querschnittsenden verjüngt.

## Beschreibung

Die Erfindung betrifft einen Deckel zum Schließen einer Dachöffnung eines Kraftwagens nach dem Oberbegriff des Patentanspruchs 1.

Aus der DE 44 38 104 C1 ist ein Deckel als bekannt zu entnehmen, welcher als Strangpressprofil ausgebildet ist und einen Hohlquerschnitt umfasst, dessen obere Begrenzungswand mit ihrer Oberseite einen Teil der Außenkontur des Kraftwagendachs bildet. Außerdem umfasst das Strangpressprofil eine untere Begrenzungswand, die umlaufend mit der oberen Begrenzungswand verbunden ist, wobei innerhalb des Hohlquerschnitts eine Distanzmittelanordnung im Form von vertikalen Rippen angeordnet ist, welche die obere und die untere Begrenzungswand fest miteinander verbinden. Al nachteilig bei dem bekannten Deckel ist der Umstand anzusehen, dass die Strangpressprofile Halbzeuge mit ebener Gestalt sind, die schwierig an das äußere Erscheinungsbild des Kraftwagens anzupassen und belastungsgerecht zu gestalten sind.

Der Erfindung liegt daher die Aufgabe zugrunde, einen Deckel der eingangs genannten Art zu schaffen, der auf einfachere Weise an das äußere Erscheinungsbild des Kraftwagens angepasst und belastungsgerechter gestaltet werden kann.

Die erfindungsgemäße Lösung dieser Aufgabe ergibt sich aus den Merkmalen des Hauptanspruchs.

Vorteilhafte Ausgestaltungen der Erfindung sind den übrigen Ansprüchen zu entnehmen.

Bei dem Kraftwagen nach der Erfindung sind die obere und untere Begrenzungswand getrennt voneinander ausgebildete und zusammengefügte Kunststoffteile, so dass die beiden Einzelteile separat voneinander hergestellt werden können. Durch das Zusammenfügen entsteht ein Deckel, dessen Hohlquerschnitt sich vom Mittelbereich ausgehend zu dessen Querschnittsenden verjüngt und der sehr gut auf die äußeren Belastungen angepasst ist. Durch das Zusammenfügen der beiden Kunststoffteile ergibt sich ein äußerst eigensteifer Verbund, wobei insbesondere das äußere Kunststoffteil sehr einfach an das äußere Erscheinungsbild des Kraftwagens angepasst werden kann.

Ein besonders steifer Verbund der beiden Kunststoffteile ergibt sich, wenn als Distanzmittelanordnung eine Mehrzahl von vertikalen Rippen eingesetzt werden, welche die obere und untere Begrenzungswand fest miteinander verbinden. Die Rippen sind dabei vorzugsweise an das untere Kunststoffteil des Deckels angeformt, so dass das obere und untere Kunststoffteil in einer Fügeebene beispielsweise durch Reibschweißen nahe der Unterseite der oberen Begrenzungswand zusammengefügt werden können.

Durch die zweiteilige Ausgestaltung des Deckels kann beim Zusammenfügen der beiden Kunststoffteile zusätzlich eine Dichtung eingesetzt werden, z.B. entlang einer Stirnseite des Deckels, wobei nach dem Zusammenfügen eine maßhaltige Verankerungsnut für die Dichtung gebildet ist. Die Dichtung kann dann bei Beschädigung auch auf einfache Weise ausgetauscht werden.

Weitere Vorteile, Merkmale und Einzelheiten der Erfindung ergeben sich aus der nachfolgenden Beschreibung eines bevorzugten Ausführungsbeispiels sowie anhand der Zeichnungen; diese zeigen in
- Fig. 1: eine schematische Perspektivansicht auf ein Kraftwagendach mit einer durch ein Lamellenschiebedach verschließbaren Dachöffnung, wobei das Lamellenschiebedach eine Mehrzahl von erfindungsgemäßen Deckeln aufweist;
- Fig.2: eine Draufsicht auf eine spiegelsymmetrische Hälfte des erfindungsgemäßen Deckels gemäß Fig.1;
- Fig. 3a-d: jeweils einen Querschnitt durch den erfindungsgemäßen Deckel entlang der Linien IIIa-IIIa, IIIb-IIIb, IIIc-IIIc bzw. IIId-IIId in Fig.2; und in
- Fig. 4a-c: jeweils einen Längsschnitt durch den erfindungsgemäßen Deckel entlang der Linien IVa-IVa, IVb-IVb bzw. IVc-IVc in Fig.2.

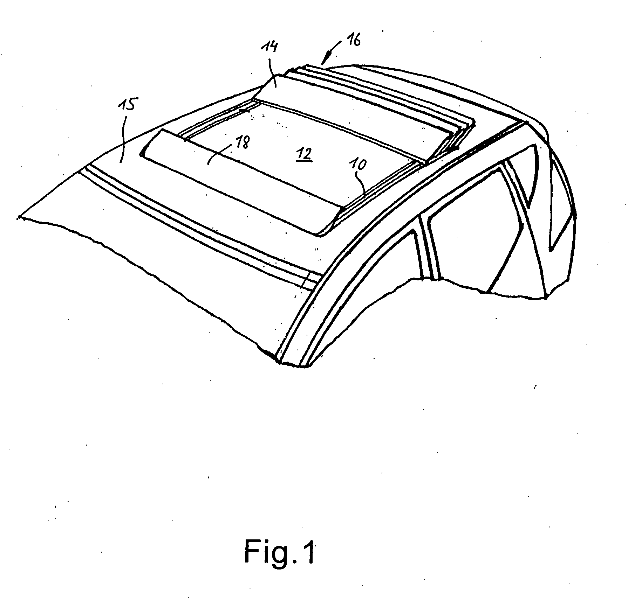

In Fig.1 ist in schematischer Perspektivansicht ein Kraftwagendach mit einer von einem Öffnungsrahmen 10 begrenzten Dachöffnung 12 dargestellt, die durch eine mehrere Lamellen oder dgl. Schiebedeckel 14 umfassende Schiebedachanordnung 16 verschließbar ist. Bei geschlossener Schiebedachanordnung 16 sind die Mehrzahl von Lamellen 14 nebeneinander und in einer gemeinsamen Ebene mit dem fest verbleibenden Dachteil 15 angeordnet, welches in dem dargestellten Ausführungsbeispiel aus Blech besteht. In die hier gezeigte Offenstellung der Schiebedachanordnung 16 sind die Deckel 14 - ausgenommen die vorderste Lamelle 18 - entlang von Führungsschienen 20 des Dachrahmens 10 verschiebbar, wobei die nach hinten bewegten Lamellen 14 in einem hinteren Bereich der Dachöffnung 12 fächerartig übereinander angeordnet sind. Die vordere Lamelle 18 wird beim Öffnen der Schiebedachanordnung 16 in eine mit ihrem hinteren Ende nach schräg oben zeigende Stellung angehoben und verbleibt zur Windabweisung am vorderen Ende der Dachöffnung 12.

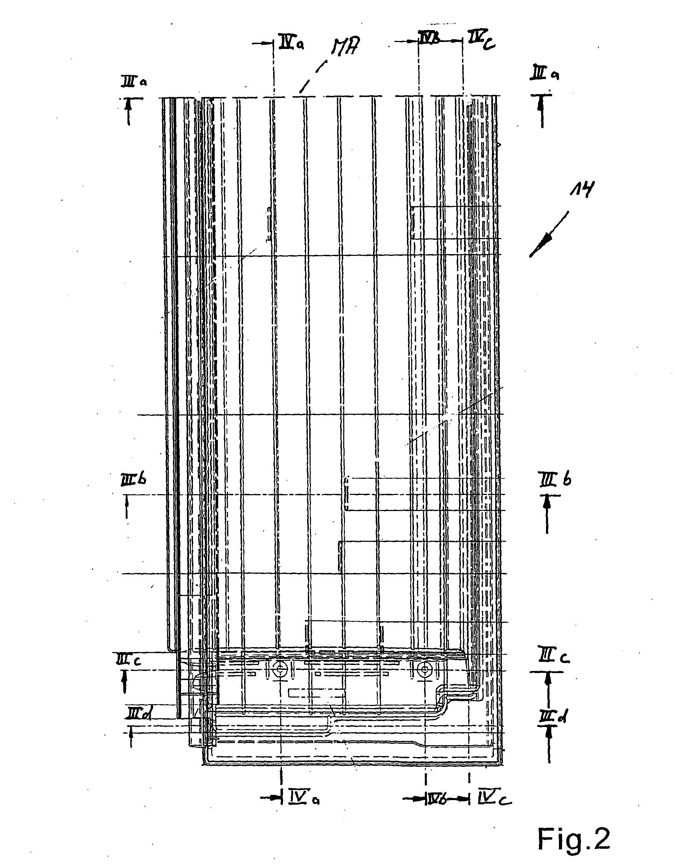

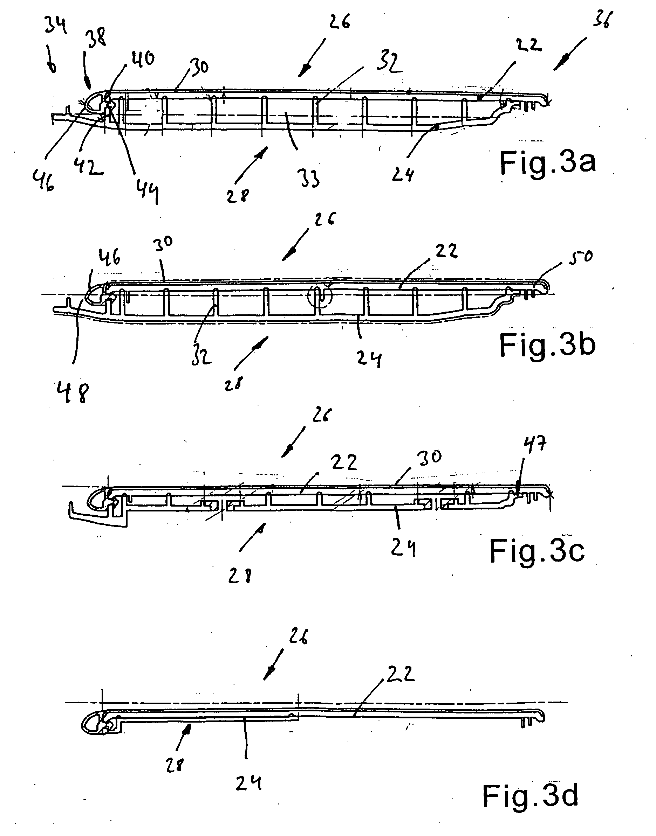

In Fig.2 ist in Draufsicht eine um eine Fahrzeuglängsmittenachse MA spiegelsymmetrische Hälfte des erfindungsgemäßen Deckels 16 gemäß Fig.1 dargestellt. In Zusammenschau mit den Figuren 3a - 3d, welche jeweils einen Querschnitt in Fahrzeuglängsrichtung durch den erfindungsgemäßen Deckel 14 entlang der Linien IIIa-IIIa, IIIb-IIIb, IIIc-IIIc bzw. IIId-IIId in Fig.2 zeigen, wird ersichtlich, dass der Deckel 14 einen Hohlquerschnitt mit einer oberen Begrenzungswand 22 und einer unteren Begrenzungswand 24 umfasst. Die obere Begrenzungswand 22 bildet mit ihrer Oberseite einen Teil der Außenkontur des Kraftwagendachs und ist mit der unteren Begrenzungswand 24 umlaufend verbunden. Dabei sind die obere Begrenzungswand 22 und untere Begrenzungswand 24 als getrennte und auf im weiteren noch näher erläuterte Weise zusammengefügte Kunststoffteile 26,28 ausgebildet.

Das obere Kunststoffteil 26 ist im wesentlichen als an die Fahrzeugaußenkontur angepasstes, leicht gewölbtes Kunststoffelement ausgebildet. Auf der Oberseite der oberen Begrenzungswand 22 bzw. des oberen Kunststoffteils 26 liegt eine Kunststofffolie 30 flächig auf. Mit anderen Worten wird die einen Teil der Außenkontur des Kraftwagendaches bildende obere Breitseite der Begrenzungswand 22 durch die Kunststofffolie 30 gebildet. In dem hier gezeigten Ausführungsbeispiel ist die Kunststofffolie 30 als tiefgezogene Formschale ausgestaltet, die mit einem das obere Kunststoffteil 26 bildenden Kunststoff zu einem Sandwichverbund hinterspritzt ist. Natürlich wäre auch eine Klebeverbindung oder dgl. Fügeverbindung zwischen der Folie 30 und dem des oberen Kunststoffteils 26 möglich. Die Kunststofffolie 30 ist kratzfest ausgebildet und vorzugsweise in Wagenfarbe oder durchsichtig gestaltet. Auch kann die Folie 30 mit einer Oberflächenprägung versehen sein.

An die Begrenzungswand 24 des unteren Kunststoffteils 28 sind eine Mehrzahl von vertikalen und in Fahrzeugquerrichtung verlaufenden Rippen 32 angeformt, welche eine innerhalb des Hohlquerschnitts des Deckels 14 angeordnete Distanzmittelanordnung bilden und den Hohlquerschnitt in mehrere längs des Deckels 14 verlaufende Hohlkammern 33 unterteilen. Es ist erkennbar, dass das untere Kunststoffteil 28 als über seine Querschnittslänge gekrümmte Formschale ausgebildet ist und sich der Hohlquerschnitt des Deckels 14 vom Mittelbereich ausgehend zu dessen vorderen und hinteren Querschnittsenden verjüngt. Das obere und untere Kunststoffteil 26,28 sind auf einer Fügeebene nahe der Unterseite der oberen Begrenzungswand 22 hier mittels eines Reibschweißverfahrens umfangsseitig und über die Rippen 32 zusammengefügt. Natürlich wären auch andere Fügeverbindungen, insbesondere auch ein Verkleben der beiden Teile 26,28 denkbar. In den Hohlquerschnitt bzw. die Hohlkammern 33 kann eine Füllung oder Isolierung eingebracht sein.

Im vorderen Endbereich 34 des Deckels 14 ist das untere Kunststoffteil 28 gegenüber dem oberen Kunststoffteil 26 überstehend ausgebildet. Demgegenüber ist im hinteren Endbereich 36 des Deckels 14 das untere Kunststoffteil 28 gegenüber dem oberen Kunststoffteil 26 zurückspringend ausgebildet. Hierdurch wird ein flächenbündiger Anschluss an einen benachbarten, identisch gestalteten Deckel ermöglicht. Entlang der vorderen Stirnseite 38 des Deckels 14 ist zwischen einer nach unten abgewinkelten Randzone 40 des oberen Kunststoffteils 26 und einer nach oben abgewinkelten Randzone 42 des unteren Kunststoffteils 28 eine Verankerungsnut 44 für eine Dichtung 46 vorgesehen, welche beim Zusammenfügen der beiden Kunststoffteile 26,28 maßhaltig gebildet wird. Die Dichtung 46 kann somit vor dem Zusammenfügen der beiden Teile 26,28 eingebracht, und dennoch bei Verschleiß oder Beschädigung nach einigen Jahren ausgetauscht werden. Die Maßhaltigkeit der Nut 44 wird durch Anschlagsflächen 47 (Fig.3c) erreicht, welche den Abstand zwischen den Teilen 26,28 bzw. zwischen den Randzonen 40,42 definieren. Am vorderen Endbereich 34 des Deckels 14 weist der gegenüber dem oberen Kunststoffteil 26 überstehende untere Kunststoffteil 28 eine Rinne 48 zur Wasserableitung in Richtung des Dachöffnungsrahmens 10 auf. Bei geschlossenem Deckel 14 ist die Rinne 48 durch eine Kanalwand 50 am hinteren Endbereich 36 eines benachbarten Deckels zu einem Rohrkanal geschlossen, wobei der Stossbereich zwischen den oberen Kunststoffteilen 26 der zwei benachbarten Deckel 14 durch die Dichtung 46 verschlossen ist.

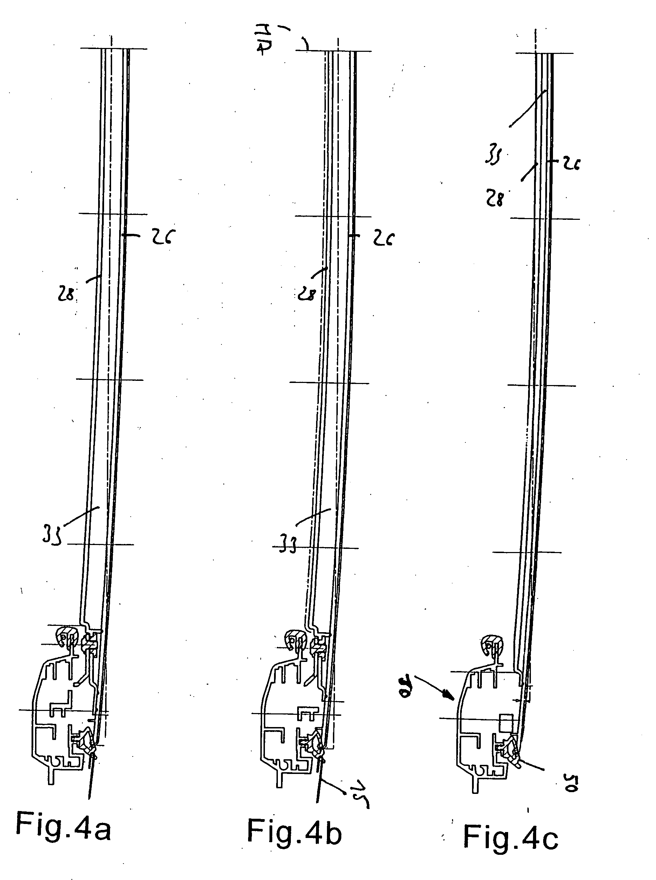

In Zusammenschau mit den Figuren 4a - 4c, welche jeweils einen Längsschnitt durch den Deckel 14 entlang der Linien IVa-IVa, IVb-IVb bzw. IVc-IVc in Fig.2 zeigen, wird erkennbar, dass die lichte Höhe der Hohlkammern 33 an den seitlichen Enden im Bereich des seitlichen Öffnungsrahmens 10 kleiner ist als im Mittelbereich des Deckels 14. In dem hier gezeigten Ausführungsbeispiel ist das obere Kunststoffteil 26 länger ausgebildet als das untere Kunststoffteil 28. Das obere Kunststoffteil 26 bzw. der Deckel 14 ist gegenüber dem Öffnungsrahmen 10 durch eine weitere Dichtung 50 abgedichtet, an welche sich andererseits die Dachfläche 15 anschließt.

Die Kunststoffteile 26,28 können aus einen durchsichtigen, einem lichtdurchlässigen oder aus einem undurchsichtigen Kunststoff gefertigt sein. Die die obere Begrenzungswand 32 verkleidende Folie 30 kann insbesondere bei der durchsichtigen oder lichtdurchlässigen Ausgestaltung des Deckels 14 auch weggelassen werden.

## Patentansprüche

1. Deckel zum Schließen einer Dachöffnung (12) eines Kraftwagens mit einem Hohlquerschnitt, dessen obere Begrenzungswand (22) mit ihrer Oberseite einen Teil der Außenkontur des Kraftwagendachs (15) bildet, und mit einer unteren Begrenzungswand (24), die umlaufend mit der oberen Begrenzungswand (22) verbunden ist, wobei innerhalb des Hohlquerschnitts eine an oberer und unterer Begrenzungswand (22,24) abgestützte Distanzmittelanordnung (32) vorgesehen ist,
**dadurch gekennzeichnet,**
**dass** obere Begrenzungswand (22) und untere Begrenzungswand (24) getrennt voneinander ausgebildete und zusammengefügte Kunststoffteile (26,28) sind, wobei sich der Hohlquerschnitt des Deckels (14) vom Mittelbereich ausgehend zu dessen Querschnittsenden verjüngt.

2. Deckel nach Anspruch 1,
**dadurch gekennzeichnet,**
**dass** der Hohlquerschnitt zwischen oberer und unterer Begrenzungswand (22,24) durch vertikale Rippen (32) in mehrere längs des Deckels (14) verlaufende Hohlkammern (33) unterteilt ist, wobei die lichte Höhe der Hohlkammern (33) an den seitlichen Enden (34,36) kleiner ist als im Mittelbereich des Deckels (14).

3. Deckel nach Anspruch 2,
**dadurch gekennzeichnet,**
**dass** die Rippen (32) an das untere Kunststoffteil (28) des Deckels (14) angeformt sind, wobei das obere und untere Kunststoffteil (26,28) nahe der Unterseite der oberen Begrenzungswand (22) zusammengefügt sind.

4. Deckel nach Anspruch 3,
**dadurch gekennzeichnet,**
**dass** das untere Kunststoffteil (28) als über seine Querschnittslänge gekrümmte Formschale ausgebildet ist.

5. Deckel nach Anspruch 3,
**dadurch gekennzeichnet,**
**dass** das obere und untere Kunststoffteil (26,28) umfangsseitig und an den Rippen (32) miteinander reibverschweißt sind.

6. Deckel nach Anspruch 1,
**dadurch gekennzeichnet,**
**dass** beim Fügen der Kunststoffteile (26,28) entlang einer Stirnseite des Deckels (14) zwischen einer nach unten abgewinkelten Randzone (40) des oberen Kunststoffteils (26) und einer nach oben abgewinkelten Randzone (42) des unteren Kunststoffteils (28) eine maßhaltige Verankerungsnut (44) gebildet wird.

7. Deckel nach Anspruch 1,
**dadurch gekennzeichnet,**
**dass** im vorderen oder hinteren Endbereich (34,36) des Deckels (14) zum flächenbündigen Anschluss an einen benachbarten Deckel eines der Kunststoffteile (26) gegenüber dem mit ihm verbundenen Kunststoffteil (28) zurückspringend ausgebildet ist.

8. Deckel nach Anspruch 7,
**dadurch gekennzeichnet,**
**dass** der gegenüber dem oberen Kunststoffteil (26) überstehende Endbereich (34) des unteren Kunststoffteils (28) eine Rinne (48) zur Wasserableitung in Richtung eines Dachöffnungsrahmens (10) aufweist.

9. Deckel nach Anspruch 8,
**dadurch gekennzeichnet,**
**dass** die Rinne (48) des Endbereichs (34) des unteren Kunststoffteils (28) bei geschlossenem Deckel (14) durch eine die Rinne (48) überdeckende Kanalwand (50) samt einer Dichtung (46) zu einem Rohrkanal geschlossen ist.

10. Deckel nach Anspruch 1,
**dadurch gekennzeichnet,**
**dass** das obere Kunststoffteil (26) mit einer Kunststofffolie (30) verkleidet ist.
